# FASCICULE DE BREVET EUROPEEN

(11) **EP 1 954 369 B1**
(45) Date de publication et mention de la délivrance du brevet: **23.12.2015**
(21) Numéro de dépôt: 06819778.9
(22) Date de dépôt: 27.11.2006
(51) Int. Cl.: B01D 17/12, B01D 17/04, B01D 17/032, B01D 19/00, B81B 7/00, B81B 7/04, B01L 3/00

(54) **MICROSYSTEME DE SEPARATION DE FLUIDES**
MIKROSYSTEM ZUR TRENNUNG VON FLUIDEN
FLUID SEPARATION MICROSYSTEM

(30) Priorité: 29.11.2005 FR 0512096
(43) Date de publication de la demande: 13.08.2008
(73) Titulaire: Commissariat à l'Énergie Atomique et aux Énergies Alternatives, 75015 Paris (FR)
(72) Inventeur: PRULHIERE, Jean-Paul, F-33000 Bordeaux (FR); SAAVEDRA, Virginie, F-33120 Arcachon (FR)
(74) Mandataire: Ilgart, Jean-Christophe
(86) Numéro de dépôt international: PCT/EP2006/068949
(87) Numéro de publication internationale: WO 2007/063048

(56) Documents cités:
- EP-A- 0 708 331
- WO-A-97/14027
- WO-A-2004/004637
- US-A- 4 976 754
- US-B1- 6 261 462

## Description

### DOMAINE TECHNIQUE

La présente invention concerne un microsystème de séparation de fluides non miscibles entre eux et contenus dans un mélange. Ce microsystème est particulièrement adapté pour séparer un gaz et un liquide lorsque les contraintes de poids et de volume du microsystème sont importantes. La présente invention concerne également un dispositif de séparation de fluides comportant au moins un microsystème de séparation de fluides de la présente invention.

### ÉTAT DE LA TECHNIQUE ANTÉRIEURE

Dans de nombreux domaines industriels, il est nécessaire de séparer des fluides différents contenus dans un mélange. Différentes techniques sont utilisées pour réaliser cette séparation, comme par exemple la distillation, la détente de fluide, ou encore la centrifugation. Mais les dispositifs mettant en oeuvre ces techniques sont encombrants.

Lorsque les contraintes de poids et de volume sont importantes, par exemple lorsque les dimensions du dispositif devant réaliser cette séparation doivent être de l'ordre du millimètre ou moins, les dispositifs intégrés et/ou compacts existants réalisant cette séparation utilisent des solutions passives, telles que des membranes poreuses constituées de séparants et de drains. Les séparants sont, par exemple, des surfaces structurées comportant des ouvertures calibrées. Dans le cas d'une séparation d'un gaz et d'un liquide, les séparants laissent passer, par exemple, le gaz, et bloquent le liquide. Le polytétrafluoroéthylène expansé, plus connu sous la marque Gore-Tex™, permet de réaliser de telles membranes.

Dans ces systèmes passifs, le déplacement des fluides, lors de leur séparation, peut être obtenu, par exemple, par variation de pression différentielle entre deux zones séparées par une membrane telle que décrite précédemment, par variation dissymétrique de l'hydrophobicité de la membrane, ou encore par application d'un champ électrique agissant sur un ou plusieurs des fluides, lors d'une électrophorèse ou d'une électro-osmose.

Les ouvertures, ou pores, d'une membrane utilisée pour une telle séparation de fluides, doivent être de très faibles dimensions, typiquement de l'ordre de quelques nanomètres. Ces dimensions sont nécessaires pour que, par exemple lors d'une séparation d'un gaz et d'un liquide, le gaz puisse s'évacuer par les pores et non le liquide. Mais cela entraîne très souvent une saturation des pores par le liquide, empêchant le passage du gaz à travers les pores. La séparation du gaz et du liquide est alors interrompue. De plus, la conception et la réalisation de ces systèmes passifs dépendent des fluides en présence. Ces systèmes n'ont donc pas un fonctionnement polyvalent permettant de séparer plusieurs mélanges comportant des fluides différents. Par exemple, un système séparant un mélange de deux liquides ne pourra pas forcément séparer un mélange différent, par exemple de gaz et de liquide.

WO2004/004637 décrit un micro système de séparation de cellules biologiques d'un mélange fluide. Ce micro système comporte des canaux micro fluidiques verticaux à l'extrémité de chacun desquels se trouve le bout d'une pièce à charnières commandée par la détection, avec lentille de caméra, d'un signal fluorescent émis par le mélange fluide de cellules quand il est dans le canal vertical. La commande du basculement de cette pièce par électrodes et ordinateur programmé adéquatement en fonction des signaux détectés, permet d'ouvrir le collecteur approprié pour le mélange présent dans chaque canal. La sélection du collecteur approprié pour le mélange, peut se faire par la détection simultanée de deux signaux fluorescents correspondants respectivement à deux longueurs d'onde différentes filtrées par deux lentilles différentes et détectées par deux caméras différents correspondants à deux capteurs différents, chaque capteur étant représenté par la combinaison d'une lentille et d'une caméra; La détection des signaux fluorescents est faite pour le mélange dans chaque canal avant le bout de la pièce à charnière. On utilise plusieurs capteurs différents pour détecter respectivement plusieurs signaux fluorescents différents. Ce micro système est conçu de telle sorte que les moments respectifs de la détection de la fluorescence, du basculement da la pièce à charnières et de son retour en position, soient réglés de façon à ce que seulement la cellule fluorescente soit séparée ce qui donne une vitesse déterminée de 0,2 mètre par seconde d'écoulement du mélange avec la cellule considérée, dans chaque canal. Une partie du moyen de commande de la pièce à charnières (l'ordinateur) et les moyens de détection de la fluorescence (caméra(s) et lentille(s)) sont à l'extérieur du micro système. La taille de ces moyens et leur distance par rapport au micro système sont donc supposés non microscopiques.

### EXPOSÉ DE L'INVENTION

La présente invention a pour but de proposer un microsystème de séparation de fluides qui ne présente pas les inconvénients mentionnés ci-dessus, c'est-à-dire un microsystème de séparation de fluides qui ne soit pas encombrant, pouvant fonctionner avec des mélanges de fluides de natures différentes, et possédant des ouvertures qui ne se bouchent pas par un des fluides du mélange lors de leur séparation.

Pour atteindre ces buts, la présente invention propose un microsystème de séparation de fluides non miscibles entre eux et contenus dans un mélange, comportant :
- au moins un moyen de détection destiné à inspecter au moins une zone du mélange et à détecter la présence d'au moins un des fluides dans cette zone,
- au moins un moyen commandé d'ouverture ou de fermeture d'un passage,
- au moins un moyen de commande de l'ouverture ou de la fermeture du passage en fonction de la nature du fluide détecté dans la zone inspectée par le moyen de détection, de manière à ce que le fluide dont la présence a été détectée s'écoule ou non par le passage.

Ainsi, au lieu d'utiliser une solution passive de séparation de fluides de l'art antérieur, on utilise un microsystème de séparation de fluides fonctionnant de manière active, permettant une gestion dynamique de l'ouverture ou de la fermeture d'un passage par lequel l'un des fluides à séparer du mélange peut s'écouler, empêchant ainsi un éventuel bouchage du passage par l'un des fluides lors du fonctionnement du microsystème. De plus, lorsque ce microsystème ne fonctionne pas, aucun des fluides du mélange ne peut traverser le microsystème, même si le mélange se trouve à l'intérieur d'un récipient sous pression.

De plus, ce microsystème étant très peu encombrant, il peut être utilisé là où les contraintes de poids et de volume sont très importantes, ainsi que dans des environnements difficiles.

On entend par microsystème, ici et dans tout le reste du document, un système intégrant, c'est-à-dire incluant, à l'échelle micrométrique, des composants mécaniques et/ou électroniques.

Les fluides peuvent être un gaz et un liquide, ou deux liquides. En effet, le microsystème de la présente invention permet de fonctionner avec des mélanges de natures différentes, indépendamment des types de liquides et de gaz.

Le microsystème peut être réalisé en technologie MEMS (Micro Electro Mechanical System en anglais, ou microsystème électromécanique) ou micro-TAS (Micro Total Analysis System en anglais, ou microsystème d'analyse totale).

Le moyen commandé peut comporter une vanne, telle une vanne de type diaphragme ou rideau.

Le moyen commandé est de préférence disposé à proximité du moyen de détection.

Le moyen de détection peut comporter au moins un capteur, tel un capteur à ultrasons, basé sur la conductivité électrique ou thermique, optique ou chimique.

Le moyen de commande peut être intégré au moyen de détection.

Le moyen de détection peut comporter une pluralité de capteurs disposés sensiblement autour du moyen commandé.

Dans ce cas, les capteurs peuvent être disposés sensiblement sur des cercles concentriques de diamètres différents et ayant pour centre le moyen commandé.

Les capteurs disposés sur un même cercle peuvent alors être sur un diamètre du cercle, ou former les sommets d'un polygone régulier inscrit dans le cercle.

Les capteurs placés sur des cercles différents peuvent être décalés radialement deux à deux.

Le microsystème peut être réalisé par gravure, telle une gravure chimique ou laser, ou par usinage d'un substrat.

Le microsystème peut être à base de semi-conducteur, tel du silicium, ou de polymère.

La présente invention concerne également un dispositif de séparation de fluides non miscibles entre eux et contenus dans un mélange, comportant au moins un microsystème, objet de la présente invention, et un support, le microsystème étant disposé sur une face du support.

Le passage du microsystème peut être disposé en face d'un trou traversant le support.

Le microsystème peut être fixé par exemple par soudure, avec de la colle, ou par adhésion moléculaire, sur la face du support.

Dans une variante, le dispositif peut être un récipient destiné à contenir le mélange, le support étant au moins une paroi de ce récipient.

Dans une autre variante, le support peut être un couvercle, destiné à recouvrir un récipient contenant le mélange.

Dans une autre variante, le dispositif peut être un tuyau dans lequel le mélange est destiné à circuler, le support étant au moins une paroi de ce tuyau.

Le microsystème peut alors être disposé à l'extérieur du récipient ou du tuyau.

La présente invention concerne également un procédé de séparation de fluides, non miscibles entre eux et contenus dans un mélange, à l'aide d'un microsystème, objet de la présente invention, comportant :
- une étape de détection de la présence d'au moins un fluide dans la zone du mélange destinée à être inspectée par le moyen de détection,
- une étape d'acquisition par le moyen de commande d'au moins un signal de détection de la présence du fluide dans la zone inspectée, délivré par le moyen de détection,
- une étape de traitement du signal de détection par le moyen de commande, qui délivre ensuite au moyen commandé un signal d'ouverture ou de fermeture du passage en fonction du signal de détection reçu, et
- une étape d'ouverture ou de fermeture du passage par le moyen commandé en fonction du signal d'ouverture ou de fermeture du passage reçu.

Lorsque le moyen de détection détecte la présence d'au moins deux fluides dans la zone inspectée, le moyen de commande peut délivrer au moyen commandé un signal d'ouverture ou de fermeture du passage.

Le moyen de commande peut délivrer le signal d'ouverture ou de fermeture du passage au moyen commandé qu'après avoir traité les signaux de détection de tous les capteurs.

L'étape de traitement du signal de détection peut prendre en compte un délai calculé en fonction de la distance entre la zone inspectée et le passage, et/ou de la viscosité du fluide détecté par le moyen de détection dans la zone inspectée.

L'étape de traitement du signal de détection peut prendre en compte la vitesse de déplacement dans le mélange du fluide détecté.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 représente un microsystème de séparation de fluides, objet de la présente invention, selon un premier mode de réalisation,
- les figures 2A et 2B représentent des capteurs de détection de fluides, utilisés par un microsystème de séparation de fluides, objet de la présente invention,
- la figure 3 représente un microsystème de séparation de fluides, objet de la présente invention, selon un second mode de réalisation,
- la figure 4 représente un microsystème de séparation de fluides, objet de la présente invention, selon un troisième mode de réalisation,
- la figure 5 représente un microsystème de séparation de fluides, objet de la présente invention, selon un quatrième mode de réalisation,
- la figure 6 représente un dispositif de séparation de fluides, objet de la présente invention, selon un premier mode de réalisation,
- la figure 7 représente un dispositif de séparation de fluides, objet de la présente invention, selon un second mode de réalisation,
- la figure 8 représente un dispositif de séparation de fluides, objet de la présente invention, selon un troisième mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

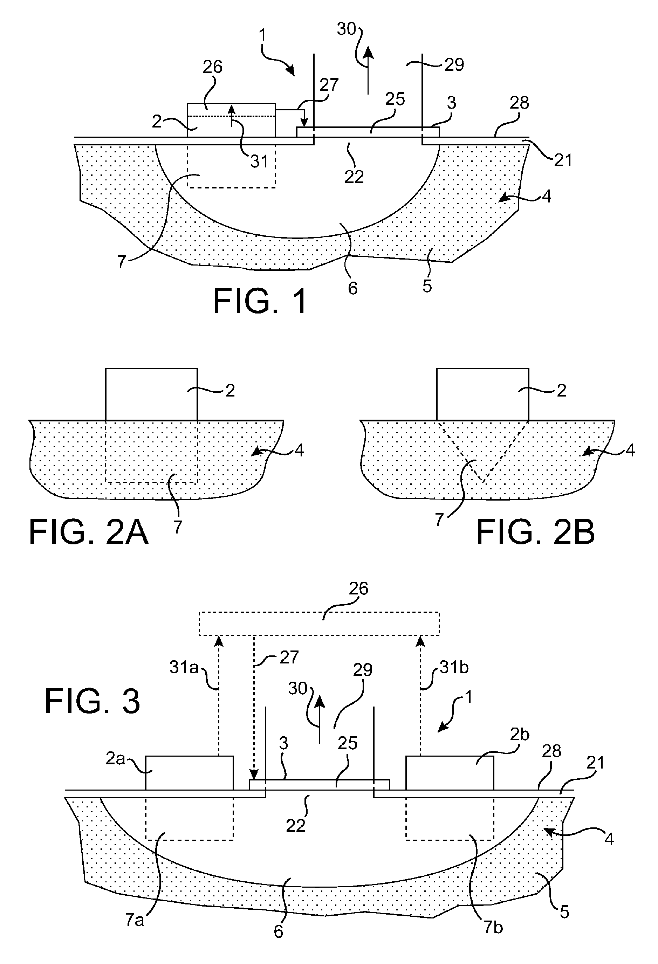

On se réfère tout d'abord à la figure 1 qui représente un microsystème 1 de séparation de fluides 5, 6 selon un premier mode de réalisation. Ce microsystème 1 actif est destiné à séparer les fluides 5, 6 non miscibles entre eux et contenus dans un mélange 4. Dans ce premier mode de réalisation, ainsi que dans tous les autres modes de réalisation, la référence 6 désigne le fluide devant être « extrait » du mélange 4. Dans l'exemple décrit, la référence 5 représente un liquide et la référence 6 un gaz. Le gaz 6 est présent dans le mélange 4 sous la forme de bulles, mais pour des raisons de simplification, une seule bulle de gaz 6 est représentée sur les figures 1, 3 et 4. Le mélange 4 pourrait également comporter d'autres fluides et/ou matières en plus des fluides 5, 6. Dans l'exemple représenté sur la figure 1, le microsystème 1 est destiné à évacuer la bulle de gaz 6 présente dans le mélange 4 en la séparant du liquide 5. Dans une autre configuration, le fluide 6 pourrait également être un liquide non miscible avec le liquide 5.

Le microsystème 1 comporte au moins un moyen de détection 2 destiné à inspecter au moins une zone 7 du mélange 4 et à détecter la présence d'au moins un des fluides 5, 6 dans cette zone 7. Le moyen de détection 2 comporte une pluralité de capteurs. Sur cette figure 1, seul un capteur a été représenté. Dans la suite de la description en liaison avec la figure 1, le moyen de détection 2 sera assimilé à ce capteur. Le capteur 2 peut, par exemple, être un capteur à ultrasons, optique, chimique, ou encore un capteur basé sur la conductivité électrique ou thermique du fluide 5, 6 présent dans la zone 7 inspectée. La technologie de détection du capteur 2 sera choisie en fonction de l'environnement dans lequel fonctionnera le microsystème 1. Si, par exemple, le capteur 2 réalise une mesure optique, le mélange 4 se trouve alors dans une structure permettant le passage d'une onde lumineuse. Le capteur 2 est capable de détecter, dans la zone 7 du mélange 4 se trouvant par exemple au droit du capteur 2 comme cela est représenté sur la figure 1, le liquide 5 ou la bulle de gaz 6. La zone 7 inspectée par le capteur 2 est définie par une forme et un volume qui sont propres au type de capteur 2 utilisé et qui dépendent de la sensibilité du capteur 2. Par exemple, la figure 2A représente un capteur 2 inspectant une zone 7 d'un mélange 4 de forme cylindrique. La figure 2B représente un capteur 2 inspectant une zone 7 d'un mélange 4 de forme conique. Le capteur 2 pourrait également inspecter une zone 7 du mélange 4 de forme différente de celles représentées sur les figures 2A et 2B. Sur la figure 1, le microsystème 1 est disposé sur une face 28 d'un support 21. La bulle de gaz 6, qui, sur la figure 1, est en contact avec une face opposée à la face 28 du support 21, est présente dans la zone 7 inspectée. Après l'inspection de la zone 7 du mélange 4, le capteur 2 délivre un signal de détection représentatif du fluide 5, 6 détecté dans la zone 7 inspectée.

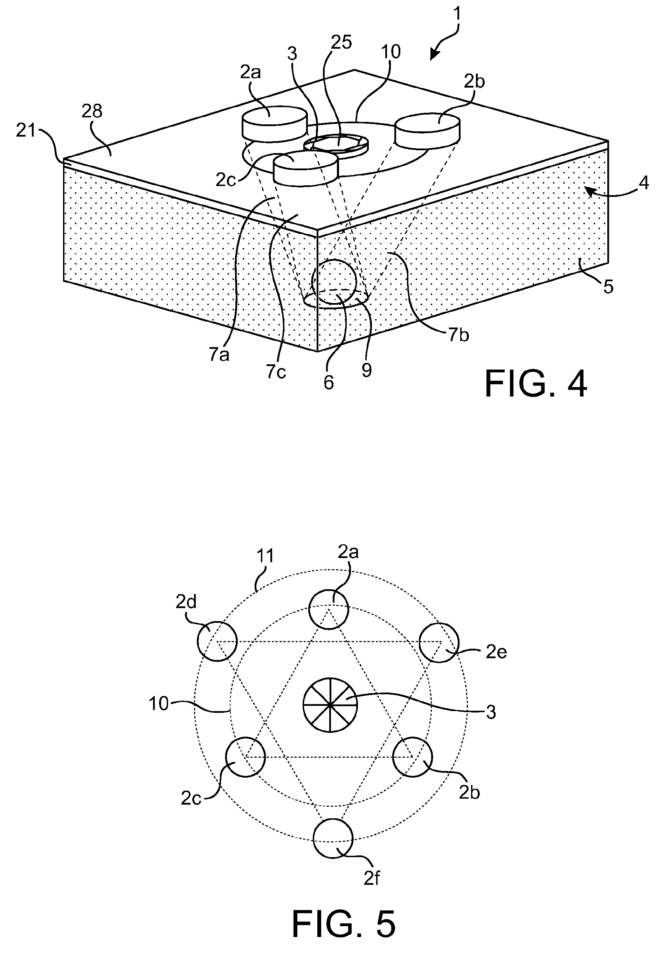

Le microsystème 1 comporte également au moins un moyen commandé 3 d'ouverture ou de fermeture d'un passage 25. Sur la figure 1, le moyen commandé 3 est disposé à proximité du capteur 2. Les autres capteurs, non représentés sur la figure 1, du microsystème 1 sont disposés sensiblement autour du moyen commandé 3. Le moyen commandé 3 et le capteur 2 peuvent être solidaires d'un même substrat, par exemple ici le support 21, ou être fabriqués de manière disjointe puis assemblés ensuite sur un même support. L'ouverture ou la fermeture du passage 25 est commandée par au moins un moyen de commande 26. Le moyen de commande 26 fait l'acquisition du signal de détection délivré par le capteur 2. Le moyen de commande 26 délivre ensuite un signal d'ouverture ou de fermeture du passage 25 en fonction du signal de détection délivré par le capteur 2. Pour cela, le moyen de commande 26 peut comporter une électronique de commande, avec par exemple une entrée reliée au capteur 2, sur laquelle est délivré le signal de détection, un ensemble de traitement du signal de détection, tel un microprocesseur, et une sortie de « puissance » reliée au moyen commandé 3, sur laquelle est délivrée le signal d'ouverture ou de fermeture du passage 25. Sur la figure 1, le moyen commandé 3 est une vanne, par exemple de type diaphragme. Elle est visible en position ouverte sur la figure 4 et en position fermée sur la figure 5. On pourrait également imaginer avoir un tout autre type de vanne, comme, par exemple, une vanne de type rideau, ou plus généralement, une vanne pouvant être commandée par le moyen de commande 26 et occupant un très petit volume. Sur la figure 1, le moyen de commande 26 est intégré sur le capteur de détection 2. De plus, sur la figure 1, le passage 25 est disposé sensiblement en face d'un trou 22 traversant le support 21.

Le fonctionnement du microsystème 1 représenté sur la figure 1 va être décrit avec un seul capteur pour des raisons de simplification. Le fonctionnement d'un microsystème avec plusieurs capteurs sera décrit plus loin.

Lorsque le capteur 2 détecte la présence du liquide 5 dans la zone 7 du mélange 4 inspectée, un signal de détection caractéristique de la présence du liquide 5 dans la zone 7 inspectée est délivré par le capteur 2. Le moyen de commande 26 fait ensuite une acquisition de ce signal de détection puis le traite. Ce traitement permet au moyen de commande 26 d'interpréter le signal de détection et de décider de délivrer un signal à la vanne 3, par exemple de fermeture du passage 25, si l'on souhaite conserver le liquide 5 dans le mélange 4. Le signal délivré par le moyen de commande 26 peut par exemple être une tension de commande, pouvant être appliquée directement à la vanne 3 si celle-ci est actionnable électriquement, ou par l'intermédiaire d'un élément (non représenté) transformant cette tension de commande en une énergie de commande différente permettant d'actionner la vanne 3 (déplacement mécanique, fluide de commande,...). Ainsi, le passage 25 étant fermé, le liquide 5 ne peut pas le traverser pour se séparer du mélange 4.

Lorsque le capteur 2 détecte la présence de la bulle de gaz 6 dans la zone 7 du mélange 4 inspectée, comme cela est représenté sur la figure 1, un signal de détection, représenté schématiquement sur la figure 1 par une flèche 31, indiquant la présence de la bulle de gaz 6 dans la zone 7 inspectée, est délivré par le capteur 2. Le moyen de commande 26 fait l'acquisition de ce signal de détection 31, le traite, puis délivre un signal d'ouverture du passage 25 à la vanne 3, représentée schématiquement sur la figure 1 par une flèche 27. Ce signal d'ouverture 27 est de nature similaire au signal de fermeture délivré lors de la détection du liquide 5, ici une tension de commande. Le passage 25 étant en position ouverte, la bulle de gaz 6 se sépare du liquide 5 en traversant le trou 22 et le passage 25, puis est évacuée au moyen, par exemple, d'un canal d'évacuation 29 communiquant avec le passage 25. L'évacuation de la bulle de gaz 6 est représentée par une flèche 30 sur la figure 1.

Ce fonctionnement dynamique du microsystème 1 illustre bien le caractère actif du microsystème 1, contrairement aux systèmes passifs de l'art antérieur fonctionnant de manière quasi-statique.

Les dimensions du passage 25 sont adaptées pour que le fluide 6, qu'il soit sous forme liquide ou gazeuse, devant traverser le passage 25, ou que le fluide 5, pouvant traverser accidentellement le passage 25, ne bouche pas ce passage 25 à cause des forces de capillarité. Par exemple, l'ouverture formée par le passage 25 lorsque la vanne 3 est ouverte présente une surface d'environ 1 millimètre carré. Cette surface est suffisamment importante pour que l'un des fluides 5, 6 ne bouche pas le passage 25. Les dimensions du passage 25 déterminent en grande partie la taille minimale des bulles, dans le cas d'un gaz, ou des gouttelettes dans le cas d'un liquide, du fluide 6 pouvant être évacuées sans risquer d'évacuer également du fluide 5. Par exemple, sur la figure 1, le passage 25 est réalisé de manière à présenter une surface d'ouverture d'environ 1 millimètre carré. La taille minimale de la bulle de gaz 6 pouvant être évacuée sans risquer d'évacuer également du liquide 5 est donc d'environ 1 millimètre carré (section de la bulle de gaz 6). Il est possible de réaliser un passage 25 de plus petites dimensions, par exemple présentant une surface d'environ 1 micromètre carré ou même de dimensions encore inférieures. De telles dimensions sont utilisées de préférence si les fluides 5, 6 peuvent traverser le passage 25 sans le boucher.

Le déplacement du fluide 6 pour traverser le passage 25 peut être dû à un mouvement naturel. Par exemple, dans le cas d'une séparation de deux liquides de densités différentes, le liquide le plus dense « tombe » au fond du mélange. Si un microsystème de la présente invention se trouve au niveau du fond du mélange, le liquide le plus dense traversera naturellement le passage du microsystème lorsque celui-ci sera ouvert. De même, dans le cas d'une séparation d'un gaz et d'un liquide, si le gaz a tendance à remonter naturellement dans le mélange et qu'un microsystème se trouve au-dessus du mélange, le gaz traversera naturellement le passage du microsystème lorsque celui-ci sera ouvert. On peut également envisager d'utiliser des phénomènes extérieurs pour évacuer le fluide 6 par le passage 25. Par exemple, sur la figure 1, la pression présente dans le mélange 4 est supérieure à celle présente dans le canal d'évacuation 29. Ainsi, lorsque le fluide 6 a été détecté par le capteur 2 et que la vanne 3 s'ouvre, le fluide 6 est évacué dans le canal d'évacuation 29 grâce à cette différence de pression. D'autres moyens, comme l'application d'un champ électrique lors d'une électrophorèse ou d'une électro-osmose, peuvent être utilisés lors de la séparation des fluides 5, 6. Enfin, il est également possible d'utiliser une pompe permettant de faire circuler le mélange 4 dans un circuit extérieur au récipient contenant le mélange 4. Au moins un microsystème 1, disposé le long du circuit, permet de réaliser ainsi la séparation des fluides 5, 6 en extrayant la fluide 6 du mélange 4.

Lorsque la zone 7 inspectée par le capteur 2 contient à la fois du gaz 6 et du liquide 5, le comportement du moyen de commande 26 dépend de la stratégie de séparation adoptée par l'utilisateur du microsystème 1. Si l'on souhaite, par exemple, recueillir le gaz 6 sans se préoccuper du liquide 5, on tolérera qu'une petite quantité de gaz 6 reste mélangée au liquide 5. Ceci se traduit par l'envoi d'un signal de fermeture du passage 25 dès que le capteur 2 détecte du liquide 5 seul ou un mélange de gaz 6 et de liquide 5. Le signal d'ouverture du passage 25 n'est délivré que lorsque le capteur 2 détecte uniquement du gaz 6. Si l'on souhaite au contraire conserver le liquide 5 en évacuant tout le gaz 6, on tolérera qu'une petite quantité de liquide 5 traverse accidentellement le passage 25 lors de l'évacuation du gaz 6. Ceci se traduit par l'envoi d'un signal d'ouverture du passage 25 dès que le capteur 2 détecte du gaz 6 seul ou un mélange de gaz 6 et de liquide 5. Le signal de fermeture du passage 25 est alors délivré lorsque le capteur 2 détecte uniquement du liquide 5.

Des paramètres supplémentaires peuvent également être pris en compte par le moyen de commande 26 en plus du signal de détection de présence d'un des fluides 5, 6 dans la zone 7 inspectée. Tout d'abord, la distance entre la zone 7 inspectée et le passage 25 peut être prise en compte pour déterminer un délai entre la réception du signal de détection provenant du capteur 2 et l'envoi du signal d'ouverture ou de fermeture à la vanne 3 par le moyen de commande 26. Les viscosités des fluides 5, 6 peuvent également être prises en compte pour le calcul de ce délai car la vitesse avec laquelle le fluide 6 traverse le passage 25 en dépend. La vitesse avec laquelle se déplace le fluide 6 dans le mélange 4 peut également être prise en compte.

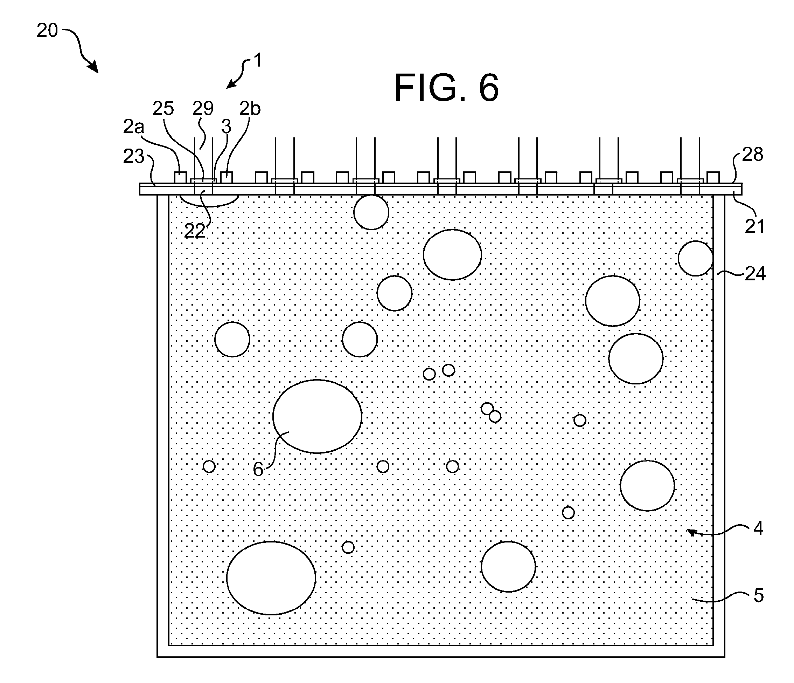

Le microsystème 1, par exemple réalisé en technologie MEMS (Micro Electro Mechanical System en anglais, ou microsystème électromécanique) ou micro-TAS (Micro Total Analysis System en anglais, ou microsystème d'analyse totale), est obtenu par exemple par gravure, telle une gravure chimique ou laser, ou par usinage d'un substrat 23, visible sur la figure 6, à base de semi-conducteur ou de polymère. Ce semi-conducteur peut, par exemple, être du silicium. Le matériau sera choisi en fonction des fluides que comporte le mélange 4. De préférence, les fluides 5, 6 ne sont pas corrosif pour le matériau du microsystème 1. Lors de la fabrication du microsystème 1, tous les éléments peuvent être fabriqués sur un même substrat, réalisant ainsi un microsystème 1 complètement intégré, les différents éléments 2, 3 et 26 étant déjà reliés entre eux (connexions électriques, mécaniques, etc.). Ces éléments 2, 3 et 26 peuvent également être réalisés séparément et ensuite reliés mécaniquement et électriquement entre eux sur un support commun pour former le microsystème 1.

La figure 3 représente un microsystème 1 de séparation de fluides 5, 6, selon un second mode de réalisation. Sur cette figure 3, le moyen commandé 3 d'ouverture ou de fermeture du passage 25 est sensiblement similaire à celui de la figure 1. Le microsystème comporte deux capteurs 2a, 2b de détection de fluides 5, 6. Le moyen de commande 26 n'est pas intégré sur un des capteurs 2a, 2b. Les capteurs 2a, 2b peuvent, par exemple, être sensiblement similaires au capteur 2 de la figure 1. Chacun des capteurs 2a, 2b, est destiné à inspecter une zone 7a, 7b du mélange 4. Les capteurs 2a, 2b sont disposés de part et d'autre de la vanne 3. Dans ce second mode de réalisation, les capteurs 2a, 2b sont disposés sensiblement sur un cercle, non représenté sur la figure 3, ayant pour centre la vanne 3, et plus précisément sur un même diamètre de ce cercle. Chacun des capteurs 2a, 2b délivre un signal de détection représentatif du fluide 5, 6 détecté dans leur zone d'inspection respective 7a, 7b. Sur la figure 3, une bulle de gaz 6 est présente dans les deux zones 7a, 7b inspectées. Un signal d'ouverture du passage 25, représenté schématiquement sur la figure 3 par une flèche 27, est donc délivré à la vanne 3 par le moyen de commande 26 après avoir traité les signaux de détection 31a, 31b indiquant la présence de la bulle de gaz 6 dans les zones 7a, 7b, inspectées. Lorsque les deux capteurs 2a, 2b détectent la présence de liquide 5 dans les zones 7a, 7b inspectées, un signal de fermeture du passage 25 est délivré à la vanne 3 par le moyen de commande 26. Lorsque l'un des deux capteurs 2a, 2b détecte la présence d'une bulle de gaz 6 et l'autre du liquide 5, ou qu'un mélange de ces deux fluides 5, 6 est détecté par l'un et/ou l'autre de ces deux capteurs 2a, 2b, le moyen de commande 26 peut délivrer un signal d'ouverture ou de fermeture du passage 25 suivant la stratégie de séparation choisie par l'utilisateur, comme cela est expliqué dans la description du premier mode de réalisation.

Comme dans le premier mode de réalisation, des paramètres supplémentaires peuvent également être pris en compte par le moyen de commande 26 en plus des informations de détection de présence d'un des fluides 5, 6 dans les zones 7a, 7b inspectées, tels que les distances entre les zones 7a, 7b et le passage 25, la viscosité du fluide 6 et la vitesse avec laquelle se déplace le fluide 6 dans le mélange 4. Le microsystème 1 de la figure 3 peut calculer la vitesse de déplacement du fluide 6 dans le mélange 4 suivant la direction reliant les deux capteurs. Le calcul de cette vitesse est réalisé par le moyen de commande 26. Le moyen de commande 26 prend en compte la distance entre les deux capteurs 2a, 2b et l'instant de détection d'un même fluide, ici le fluide 6, du mélange 4 par chacun des capteurs 2a, 2b. Avec un microsystème 1 comportant deux capteurs 2a, 2b, les capteurs sont de préférence relativement proches pour pouvoir considérer que la vitesse de la bulle de gaz 6 est linéaire et que les changements de vitesse de déplacement de la bulle de gaz 6 ne sont pas brusques.

Dans les deux premiers modes de réalisation, une très faible quantité du liquide 5 peut quand même traverser accidentellement le passage 25 lorsque celui-ci est ouvert. Le microsystème 1 comportant deux capteurs 2a, 2b, comme celui du second mode de réalisation, permet de détecter la présence du fluide 6 lorsque celui-ci se trouve au droit de la vanne 3. Ainsi, un microsystème 1 comportant deux capteurs 2a, 2b, tel que celui représenté sur la figure 3, permet de limiter la quantité du fluide 5 pouvant traverser accidentellement le passage 25 lorsqu'il est ouvert, par rapport à un microsystème n'utilisant qu'un seul capteur. Dans le second mode de réalisation, une bulle de gaz 6 est détectée par les deux capteurs 2a, 2b et donc s'étend d'un capteur 2a à l'autre 2b. Il est également possible de configurer le microsystème 1 de manière à ce que le passage 25 s'ouvre lorsque l'un ou l'autre des deux capteurs 2a, 2b détecte une bulle de gaz 6. Dans ce cas, la taille minimale d'une bulle de gaz 6 pouvant être séparée du liquide 5 est identique à celle pouvant être séparée par un microsystème comportant un seul capteur.

Les techniques de réalisation du microsystème 1 selon le second mode de réalisation peuvent être similaires à celles utilisées pour la réalisation du microsystème 1 selon le premier mode de réalisation.

On peut également envisager que le microsystème actif 1 comporte plus de deux capteurs 2a, 2b de détection. La figure 4 représente un microsystème 1 de séparation de fluides 5, 6, selon un troisième mode de réalisation. Le moyen commandé 3 d'ouverture ou de fermeture du passage 25 est sensiblement similaire à celui des deux précédents modes de réalisation. Le microsystème 1 comporte également trois capteurs 2a, 2b, 2c de détection de fluides 5, 6, sensiblement similaires à ceux des précédents modes de réalisation. Les capteurs 2a, 2b, 2c sont disposés sur un cercle 10 dont le centre est la vanne 3, et forment les sommets d'un triangle équilatéral inscrit dans le cercle 10. Le moyen de commande n'est pas représenté sur cette figure 4 dans un souci de simplification. Sur cette figure 4, la vanne 3 de type diaphragme est représentée en position ouverte. Chacun des capteurs 2a, 2b, 2c inspecte une zone 7a, 7b, 7c du mélange 4. Un signal d'ouverture du passage 25 est délivré par le moyen de commande 26 lorsque les trois capteurs 2a, 2b et 2c ont détecté la présence d'une bulle de gaz 6 dans les zones 7a, 7b et 7c du mélange 4. On peut remarquer que sur cette figure 4, les zones 7a, 7b, 7c du mélange 4 inspectées, qui ont toutes une forme cylindrique, se croisent dans une région 9 centrée au droit de la vanne 3. Ainsi, le signal d'ouverture du passage 25 n'est délivré que lorsque la bulle de gaz 6 se trouve au droit de la vanne 3, dans la région 9 d'intersection commune aux trois zones 7a, 7b, 7c du mélange 4 inspectées. Lorsque les trois capteurs 2a, 2b, 2c détectent la présence de liquide 5 dans les trois zones 7a, 7b, 7c inspectées, un signal de fermeture du passage 25 est délivré à la vanne 3 par le moyen de commande 26. Lorsque l'un des trois capteurs, par exemple 2a, détecte la présence d'une bulle de gaz 6 et que les deux autres capteurs 2b, 2c, détectent du liquide 5, le moyen de commande 26 peut délivrer un signal d'ouverture ou de fermeture du passage 25 suivant la stratégie de séparation choisie par l'utilisateur, comme cela est expliqué dans le premier mode de réalisation. Il en est de même lorsqu'au moins l'un des trois capteurs 2a, 2b, 2c détecte un mélange des deux fluides 5, 6. Le microsystème 1 selon ce troisième mode de réalisation permet de limiter encore plus la quantité du liquide 5 pouvant traverser accidentellement le passage 25 de la vanne 3 lorsque celui-ci est ouvert, par rapport aux microsystèmes 1 des deux précédents modes de réalisation. Enfin, ce microsystème 1 selon le troisième mode de réalisation permet également d'affiner la mesure de la vitesse de la bulle de gaz 6 dans le mélange 4. Les techniques de réalisation du microsystème 1 selon le troisième mode de réalisation peuvent être similaires à celles utilisées pour la réalisation du microsystème 1 selon le premier mode de réalisation.

La figure 5 représente un microsystème 1 de séparation de fluides 5, 6 selon un quatrième mode de réalisation. Le moyen commandé 3 d'ouverture ou de fermeture d'un passage 25 est ici une vanne sensiblement similaire à celle des trois précédents modes de réalisation. Le moyen de commande n'est pas représenté sur cette figure 5, dans un souci de simplification. Le moyen de détection comporte ici six capteurs 2a à 2f de détection de fluides 5, 6, sensiblement similaires à ceux des précédents modes de réalisation. Dans ce quatrième mode de réalisation, les capteurs 2a à 2f sont disposés sensiblement sur des cercles concentriques 10 et 11 de diamètres différents et ayant pour centre la vanne 3. Les trois premiers capteurs 2a, 2b, 2c sont disposés sur le premier cercle 10 et les trois autres capteurs 2d, 2e, 2f sur le second cercle 11. Le second cercle 11 a un diamètre supérieur à celui du premier cercle 10. Dans ce quatrième mode de réalisation, les capteurs disposés sur un même cercle forment les sommets d'un polygone régulier. Les trois premiers capteurs 2a, 2b et 2c forment les sommets d'un triangle équilatéral inscrit dans le cercle 10, et les trois autres capteurs 2d, 2e et 2f forment les sommets d'un triangle équilatéral inscrit dans le cercle 11. Les capteurs 2a à 2f de cercles différents sont décalés radialement deux à deux. Le fonctionnement du microsystème 1 selon le quatrième mode de réalisation est identique à celui du microsystème 1 selon le troisième mode de réalisation, les détections ne s'appliquant pas à trois mais à six capteurs 2a à 2f. En plus d'avoir des avantages sensiblement similaires à ceux du troisième mode de réalisation, le microsystème 1 selon ce quatrième mode de réalisation permet d'obtenir des informations sur la vitesse de déplacement de la bulle de gaz 6 non plus suivant une droite mais dans un plan qui est délimité par les zones de détection 7a à 7f. Les techniques de réalisation du microsystème 1 selon le quatrième mode de réalisation peuvent être similaires à celles utilisées pour la réalisation du microsystème 1 selon le premier mode de réalisation.

De multiples configurations sont possibles pour réaliser un microsystème 1 détectant la position et la vitesse de déplacement d'une bulle de gaz 6, les conditions étant que le moyen de détection 2 du microsystème 1 comporte plusieurs capteurs dans un plan et que les capteurs, dont les coordonnées dans le plan sont connues, sont positionnés de manière à ce que la combinaison des informations fournies par les capteurs soit pertinente pour la détermination de la position et de la vitesse de la bulle de gaz 6.

La présente invention concerne également un dispositif 20 de séparation de fluides 5, 6 non miscibles entre eux et contenus dans un mélange 4. Le dispositif 20 comporte au moins un support 21. Ce support 21 peut être à base de n'importe quel matériau : textile, métallique, synthétique, plastique, semi-conducteur, etc. Le dispositif 20 comporte également au moins un microsystème 1 de séparation des fluides 5, 6, disposé sur une face 28 du support 21. Le support 21 peut être en contact avec le mélange 4. La figure 6 représente un dispositif 20 selon un premier mode de réalisation. Ce dispositif 20 permet de séparer le fluide 6, ici sous forme de bulles de gaz, du liquide 5, tous deux présents dans le mélange 4. Sur la figure 6, le support 21 est un couvercle disposé sur un récipient 24 contenant le mélange 4. Sur la figure 6, plusieurs microsystèmes 1 sont intégrés sur le support 21. Les microsystèmes 1 peuvent être sensiblement similaires à ceux de l'un des modes de réalisation décrit plus haut. Sur la figure 6, chaque microsystème 1 comporte un moyen commandé 3 d'ouverture ou de fermeture d'un passage 25, ici une vanne, au moins un moyen de détection de fluides 5, 6, ici des capteurs 2a, 2b, par exemple à ultrasons, et un moyen de commande non représenté sur cette figure 6. Les microsystèmes 1 du dispositif 20 de la figure 6 sont donc sensiblement similaires au microsystème 1 de la figure 3. Chaque vanne 3 d'un des microsystèmes 1 est disposée en face d'un trou 22 traversant le support 21. Le fonctionnement de chaque microsystème 1 peut par exemple être similaire au fonctionnement du microsystème de la figure 3 décrit plus haut dans la description. Dans ce premier mode de réalisation du dispositif 20, une surpression est créée dans le récipient 24, permettant d'évacuer les bulles de gaz 6 par un canal d'évacuation 29 lorsque l'un des passages 25 s'ouvre. Le dispositif 20 selon le premier mode de réalisation est réalisé à partir d'un substrat 23 de silicium dans lequel les microsystèmes 1 de séparation de fluides 5, 6 ont été gravés, par exemple par gravure laser. Les techniques de réalisation des microsystèmes 1 peuvent être similaires à celles utilisées pour la réalisation du microsystème 1 selon le premier mode de réalisation. Le dispositif 20 peut comporter jusqu'à plusieurs milliers de microsystèmes 1 intégrés sur le support 21. Le nombre de microsystème 1 et leurs positions dépendent du dispositif 20. Par exemple, si le fluide 6 se place de manière aléatoire dans le mélange 4, les microsystèmes 1 seront répartis uniformément sur le support 21. Par contre, si le fluide 6 se place à des endroits préférentiels dans le mélange 4, les microsystèmes 1 sont concentrés vers ces endroits préférentiels. Le nombre de microsystèmes 1 à intégrer au support 21 est également directement proportionnelle à la vitesse souhaitée pour réaliser cette séparation de fluides 5, 6. Ces caractéristiques et d'autres fournissent des contraintes qui sont prises en compte lors de la conception du dispositif 20.

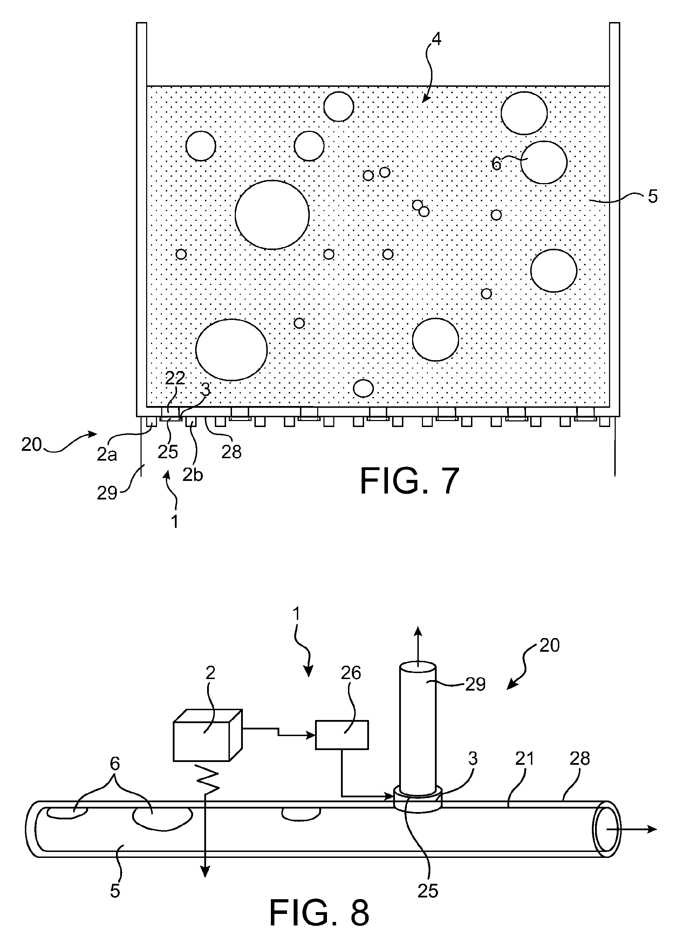

La figure 7 représente un dispositif 20 de séparation de fluides selon un second mode de réalisation. Dans ce second mode de réalisation, le dispositif 20 est un récipient destiné à contenir un mélange 4 composé d'un premier liquide 5 et d'un second liquide 6 à séparer du liquide 5. Le récipient 20 comporte des microsystèmes 1, sensiblement similaires à ceux décrits pour le dispositif 20 selon le premier mode de réalisation. Ces microsystèmes 1 sont disposés sur un support 21, ici le fond du récipient 20. Les microsystèmes 1 sont tout d'abord fabriqués à partir d'un substrat, par exemple à base de silicium, puis découpés individuellement, et enfin fixés avec de la colle, de la soudure, ou par adhésion moléculaire contre le fond 21, par exemple à l'extérieur du récipient 20. Ici, le second liquide 6 étant plus dense que le premier liquide 5, le second liquide 6 « tombe » naturellement vers le fond 21 du récipient 20. Le fond 21 comporte également des trous 22 en face desquels sont placés les passages 25 des microsystèmes 1. Sur ce dispositif 20, un seul canal d'évacuation 29, commun pour tous les microsystèmes 1, permet d'évacuer le second liquide 6 lorsqu'il est séparé du mélange 4. Le fonctionnement des microsystèmes 1 (ouverture et fermeture du passage 25) du dispositif 20 selon ce second mode de réalisation est sensiblement similaire à celui décrit plus haut pour les microsystèmes 1 du dispositif 20 selon le premier mode de réalisation.

La figure 8 représente un dispositif 20 de séparation de fluides 5, 6 selon un troisième mode de réalisation. Dans ce troisième mode de réalisation, le dispositif 20 comporte un tuyau, tel un tuyau capillaire, dans lequel circule un mélange 4. Le mélange 4 comprend un liquide 5 et des bulles de gaz 6. Le dispositif 20 comporte un support 21 qui est ici une paroi du tuyau. Sur cette paroi 21 du tuyau sont disposés plusieurs microsystèmes 1, sensiblement similaires à l'un de ceux décrit précédemment. Sur la figure 8, un seul microsystème 1 est représenté. Le microsystème 1 de la figure 8 est par exemple sensiblement similaire à ceux utilisés par le dispositif 20 selon le premier mode de réalisation, sur la figure 6.

## Revendications

1. Microsystème (1) de séparation de fluides (5, 6) non miscibles entre eux et contenus dans un mélange (4), comportant :
- au moins un moyen de détection (2) destiné à inspecter au moins une zone (7) du mélange (4) et à détecter la présence d'au moins un des fluides (5, 6) dans cette zone (7),
- au moins un moyen commandé (3) d'ouverture ou de fermeture d'un passage (25),
- au moins un moyen de commande (26) de l'ouverture ou de la fermeture du passage (25) en fonction de la nature du fluide (5, 6) détecté dans la zone (7) inspectée par le moyen de détection (2), de manière à ce que le fluide (5, 6) dont la présence a été détectée s'écoule ou non par le passage (25), **caractérisé en ce que** le moyen de détection (2) comporte une pluralité de capteurs (2a, ..., 2n) disposés sensiblement autour du moyen commandé (3).

2. Microsystème (1) selon la revendication 1, les fluides (5, 6) étant un gaz et un liquide, ou deux liquides.

3. Microsystème (1) selon l'une des revendications précédentes, réalisé en technologie MEMS ou micro-TAS.

4. Microsystème (1) l'une des revendications précédentes, le moyen commandé (3) comportant une vanne, telle une vanne de type diaphragme ou rideau.

5. Microsystème (1) selon l'une des revendications précédentes, le moyen commandé (3) étant disposé à proximité du moyen de détection (2).

6. Microsystème (1) selon l'une quelconque des revendications précédentes, le moyen de détection (2) comportant au moins un capteur, tel un capteur à ultrasons, basé sur la conductivité électrique ou thermique, optique ou chimique.

7. Microsystème (1) selon l'une des revendications précédentes, le moyen de commande (26) étant intégré au moyen de détection (2).

8. Microsystème (1) selon l'une des revendications précédentes, les capteurs (2a, ..., 2n) étant disposés sensiblement sur des cercles concentriques (10, 11) de diamètres différents et ayant pour centre le moyen commandé (3).

9. Microsystème (1) selon la revendication 8, les capteurs (2a, ..., 2n) disposés sur un même cercle (10, 11) étant sur un diamètre du cercle (10, 11), ou forment les sommets d'un polygone régulier inscrit dans le cercle (10, 11).

10. Microsystème (1) selon l'une des revendications 8 ou 9, les capteurs (2a, ..., 2n) placés sur des cercles (10, 11) différents étant décalés radialement deux à deux.

11. Microsystème (1) selon l'une des revendications précédentes, réalisé par gravure, telle une gravure chimique ou laser, ou par usinage d'un substrat (23).

12. Microsystème (1) selon l'une des revendications précédentes, à base de semi-conducteur, tel du silicium, ou de polymère.

13. Dispositif (20) de séparation de fluides (5, 6) non miscibles entre eux et contenus dans un mélange (4), comportant au moins un microsystème (1) selon l'une des revendications précédentes et un support (21), le microsystème (1) étant disposé sur une face (28) du support (21).

14. Dispositif (20) selon la revendication 13, le passage (25) du microsystème (1) étant disposé en face d'un trou (22) traversant le support (21).

15. Dispositif (20) selon l'une des revendications 13 ou 14, le microsystème (1) étant fixé par exemple par soudure, avec de la colle, ou par adhésion moléculaire, sur la face (28) du support (21).

16. Dispositif (20) selon l'une des revendications 13 à 15, ce dispositif (20) étant un récipient destiné à contenir le mélange (4), le support (21) étant au moins une paroi de ce récipient.

17. Dispositif (20) selon l'une des revendications 13 à 15, le support (21) étant un couvercle, destiné à recouvrir un récipient (24) contenant le mélange (4).

18. Dispositif (20) selon l'une des revendications 13 à 15, ce dispositif (20) étant un tuyau dans lequel le mélange (4) est destiné à circuler, le support (21) étant au moins une paroi de ce tuyau.

19. Dispositif (20) selon l'une des revendications 16 ou 18, le microsystème (1) étant disposé à l'extérieur du récipient ou du tuyau.

20. Procédé de séparation de fluides (5, 6), non miscibles entre eux et contenus dans un mélange (4), à l'aide d'un microsystème (1) selon l'une des revendications 1 à 12, comportant :
- une étape de détection de la présence d'au moins un fluide (5, 6) dans la zone (7) du mélange (4) destinée à être inspectée par le moyen de détection (2),
- une étape d'acquisition par le moyen de commande (26) d'au moins un signal de détection de la présence du fluide (5, 6) dans la zone (7) inspectée, délivré par le moyen de détection (2),
- une étape de traitement du signal de détection par le moyen de commande (26), qui délivre ensuite au moyen commandé (3) un signal d'ouverture ou de fermeture du passage (25) en fonction du signal de détection reçu, et
- une étape d'ouverture ou de fermeture du passage (25) par le moyen commandé (3) en fonction du signal d'ouverture ou de fermeture du passage (25) reçu.

21. Procédé de séparation de fluides (5, 6) selon la revendication 20, dans lequel, lorsque le moyen de détection (2) détecte la présence d'au moins deux fluides (5, 6) dans la zone (7) inspectée, le moyen de commande (26) délivre au moyen commandé (3) un signal d'ouverture du passage (25).

22. Procédé de séparation de fluides (5, 6) selon la revendication 20, dans lequel, lorsque le moyen de détection (2) détecte la présence d'au moins deux fluides (5, 6) dans la zone (7) inspectée, le moyen de commande (26) délivre au moyen commandé (3) un signal de fermeture du passage (25).

23. Procédé de séparation de fluides (5, 6) selon l'une des revendications 20 à 22, dans lequel le moyen de commande (26) délivre le signal d'ouverture ou de fermeture du passage (25) au moyen commandé (3) qu'après avoir traité les signaux de détection de tous les capteurs (2a, ..., 2n).

24. Procédé de séparation de fluides (5, 6) selon l'une des revendications 20 à 23, l'étape de traitement du signal de détection prenant en compte un délai calculé en fonction de la distance entre la zone (7) inspectée et le passage (25), et/ou de la viscosité du fluide (5, 6) détecté par le moyen de détection (2) dans la zone (7) inspectée.

25. Procédé de séparation de fluides (5, 6) selon l'une des revendications 20 à 24, dans lequel l'étape de traitement du signal de détection prend en compte la vitesse de déplacement dans le mélange (4) du fluide (5, 6) détecté.

## Patentansprüche

1. Mikrosystem (1) zur Trennung von Fluiden (5, 6), welche nicht miteinander mischbar sind und in einem Gemisch (4) enthalten sind, wobei das Mikrosystem Folgendes umfasst:
- mindestens eine Erfassungseinrichtung (2), welche zur Kontrolle mindestens einer Zone (7) des Gemischs (4) sowie zur Erfassung des Vorhandenseins zumindest eines der Fluide (5, 6) in dieser Zone (7) bestimmt ist;
- mindestens eine gesteuerte Einrichtung (3) zur Öffnung oder Schließung eines Durchgangs (25);
- mindestens eine Steuervorrichtung (26) zur Öffnung oder Schließung des Durchgangs (25) in Abhängigkeit von der Beschaffenheit des Fluids (5, 6), welches in der von der Erfassungseinrichtung (2) kontrollierten Zone (7) festgestellt wird, damit das Fluid (5, 6), dessen Vorhandensein festgestellt worden ist, durch den Durchgang (25) fließt oder nicht,
**dadurch gekennzeichnet, dass**
die Erfassungseinrichtung (2) eine Mehrzahl von Sensoren (2a, ..., 2n) umfasst, welche im Wesentlichen in der Umgebung von der gesteuerten Einrichtung (3) angeordnet sind.

2. Mikrosystem (1) nach Anspruch 1, wobei die Fluide (5, 6) ein Gas und eine Flüssigkeit sind, oder zwei Flüssigkeiten.

3. Mikrosystem (1) nach einem der vorhergehenden Ansprüche, welches in MEMS-Technologie oder Micro-TAS-Technologie realisiert ist.

4. Mikrosystem (1) nach einem der vorhergehenden Ansprüche, wobei die gesteuerte Einrichtung (3) ein Ventil umfasst, wie ein Ventil von der Art einer Blende odes eines Vorhangs.

5. Mikrosystem (1) nach einem der vorhergehenden Ansprüche, wobei die gesteuerte Einrichtung (2) in der Nähe der Erfassungseinrichtung (2) angeordnet ist.

6. Mikrosystem (1) nach einem der vorhergehenden Ansprüche, wobei die Erfassungseinrichtung (2) mindestens einen Sensor umfasst, wie einen Ultraschallsensor, welcher auf der elektrischen Leitfähigkeit oder Wärmeleitfähigkeit basiert, einen optischen oder chemischen Sensor.

7. Mikrosystem (1) nach einem der vorhergehenden Ansprüche, wobei die Steuereinrichtung (26) in der Erfassungseinrichtung (2) aufgenommen ist.

8. Mikrosystem (1) nach einem der vorhergehenden Ansprüche, wobei die Sensoren (2a, ..., 2n) im Wesentlichen auf konzentrischen Kreisen (10, 11) mit unterschiedlichen Durchmessern angeordnet sind und als Mittelpunkt die gesteuerte Einrichtung (3) aufweisen.

9. Mikrosystem (1) nach Anspruch 8, wobei die Sensoren (2a, ..., 2n), welche auf einem selben Kreis (10, 11) angeordnet sind, auf einem Durchmesser des Kreises (10, 11) liegen, oder die Ecken eines regelmäßigen Polygons in dem Kreis (10, 11) bilden.

10. Mikrosystem (1) nach einem derAnsprüche 8 oder 9, wobei die auf den unterschiedlichen Kreisen (10, 11) platzierten Sensoren (2a, ..., 2n) paarweise radial versetzt sind.

11. Mikrosystem (1) nach einem der vorhergehenden Ansprüche, welches durch Ätzen, wie chemisches Ätzen oder Laserätzen realisiert ist, oder durch Bearbeitung eines Substrats.

12. Mikrosystem (1) nach einem der vorhergehenden Ansprüche auf Halbleiterbasis wie Silizium, oder auf Polymerbasis.

13. Vorrichtung (20) zur Trennung von Fluiden (5, 6), welche miteinander nicht mischbar und in einem Gemisch (4) enthalten sind, wobei die Vorrichtung mindestens ein Mikrosystem (1) nach einem der vorhergehenden Ansprüche sowie einen Träger (21) aufweist, wobei das Mikrosystem (1) auf einer Fläche (28) des Trägers (21) angeordnet ist.

14. Vorrichtung (20) nach Anspruch 13, wobei der Durchgang (25) des Mikrosystems (1) gegenüber einem Loch (22) angeordnet ist, welches durch den Träger (21) verläuft.

15. Vorrichtung (20) nach einem der Ansprüche 13 oder 14, wobei das Mikrosystem (1) beispielsweise durch Schweißen, mit Klebstoff oder durch Molekularhaftung auf der Fläche (28) des Trägers (21) befestigt ist.

16. Vorrichtung (20) nach einem der Ansprüche 13 bis 15, wobei die Vorrichtung (20) ein Behälter ist, welcher dazu bestimmt ist, das Gemisch (4) aufzunehmen, wobei der Träger (21) mindestens eine Wand dieses Behälters ist.

17. Vorrichtung (20) nach einem der Ansprüche 13 bis 15, wobei der Träger (21) ein Verschlussdeckel ist, welcher zur Abdeckung eines das Gemisch (4) enthaltenden Behälters (24) bestimmt ist.

18. Vorrichtung (20) nach einem der Ansprüche 13 bis 15, wobei die Vorrichtung (20) ein Rohr ist, in welchem das Gemisch zur Zirkulation bestimmt ist, wobei der Träger (21) mindestens eine Wand dieses Rohrs ist.

19. Vorrichtung (20) nach einem der Ansprüche 16 oder 18, wobei das Mikrosystem (1) außerhalb des Behälters oder des Rohrs angeordnet ist.

20. Verfahren zur Trennung von Fluiden (5, 6), welche miteinander nicht mischbar und in einem Gemisch (4) enthalten sind, mit Hilfe eines Mikrosystems (1) nach einem der Ansprüche 1 bis 12, wobei das Verfahren die folgenden Schritte umfasst:
- einen Schritt der Erfassung des Vorhandenseins zumindest eines Fluids (5, 6) in der Zone (7) des Gemischs (4), welche Zone zur Kontrolle durch die Erfassungseinrichtung (2) bestimmt ist;
- einen Schritt der Erfassung zumindest eines Signals der Erfassung des Vorhandenseins von Fluid (5, 6) in der kontrollierten Zone (7) durch die Steuereinrichtung (26), wobei das Signal von der Erfassungseinrichtung (2) geliefert wird;
- einen Schritt der Verarbeitung des erfassten Signals mit Hilfe der Steuereinrichtung (26), welche anschließend ein Signal zur Öffnung oder Schließung des Durchgangs (25) in Abhängigkeit von dem empfangenen Erfassungssignal an die gesteuerte Einrichtung (3) liefert; und
- einen Schritt der Öffnung oder Schließung des Durchgangs (25) mit Hilfe der gesteuerten Einrichtung (3) in Abhängigkeit von dem empfangenen Signal zur Öffnung oder Schließung des Durchgangs (25).

21. Verfahren zur Trennung von Fluiden (5, 6) nach Anspruch 20, bei welchem dann, wenn die Erfassungseinrichtung (2) das Vorhandensein von mindestens zwei Fluiden (5, 6) in der kontrollierten Zone (7) erfasst, die Steuereinrichtung (26) ein Signal zur Öffnung des Durchgangs (25) an die gesteuerte Einrichtung (3) liefert.

22. Verfahren zur Trennung von Fluiden (5, 6) nach Anspruch 20, bei welchem dann, wenn die Erfassungseinrichtung (2) das Vorhandensein von mindestens zwei Fluiden (5, 6) in der kontrollierten Zone (7) erfasst, die Steuereinrichtung (26) ein Signal zur Schließung des Durchgangs (25) an die gesteuerte Einrichtung (3) liefert.

23. Verfahren zur Trennung von Fluiden (5, 6) nach einem der Ansprüche 20 bis 22, bei welchem die Steuereinrichtung (26) das Signal zur Öffnung oder Schließung des Durchgangs (25) an die gesteuerte Einrichtung (3) liefert, nachdem die Erfassungssignale aller Sensoren (2a, ..., 2n) verarbeitet worden sind.

24. Verfahren zur Trennung von Fluiden (5, 6) nach einem der Ansprüche 20 bis 23, wobei der Schritt der Verarbeitung des Erfassungssignals eine Verzögerung berücksichtigt, welche in Abhängigkeit von der Entfernung zwischen der kontrollierten Zone (7) und dem Durchgang (25) berechnet wird, und/oder die Viskosität des Fluids (5, 6), welches mit Hilfe der Erfassungseinrichtung (2) in der kontrollierten Zone (7) erfasst wird.

25. Verfahren zur Trennung von Fluiden (5, 6) nach einem derAnsprüche 20 bis 24, bei welchem der Schritt der Signalverarbeitung die Bewegungsgeschwindigkeit in dem Gemisch (4) des festgestellten Fluids (5, 6) berücksichtigt.

## Claims

1. Microsystem (1) for separating fluids (5, 6) not miscible with each other and contained in a mixture (4), comprising:
- at least one detection means (2) intended to inspect at least one area (7) of the mixture (4) and to detect the presence of at least one of the fluids (5,6) in this area (7),
- at least one controlled means (3) for opening or closing a passage (25),
- at least one control means (26) for the opening or the closing of the passage (25) as a function of the nature of the fluid (5, 6) detected in the area (7) inspected by the detection means (2), in such a way that the fluid (5, 6) whose presence has been detected flows or not through the passage (25),
**characterized in that**
the detection means (2) comprises a plurality of sensors (2a, ..., 2n) arranged substantially around the controlled means (3).

2. Microsystem (1) according to claim 1, the fluids (5, 6) being a gas and a liquid, or two liquids.

3. Microsystem (1) according to one of the previous claims, formed in MEMS or micro-TAS technology.

4. Microsystem (1) according to one of the previous claims, the controlled means (3) comprising a valve, such as a diaphragm or curtain type valve.

5. Microsystem (1) according to one of the previous claims, the controlled means (3) being arranged near to the detection means (2).

6. Microsystem (1) according to one of the previous claims, the detection means (2) comprising at least one sensor, such as an ultrasound sensor, based on the electrical or thermal, optical or chemical conductivity.

7. Microsystem (1) according to one of the previous claims, the control means (26) being integrated in the detection means (2).

8. Microsystem (1) according to one of the previous claims, the sensors (2a, ..., 2n) being arranged substantially on concentric circles (10, 11) of different diameters and having for centre the controlled means (3).

9. Microsystem (1) according to claim 8, the sensors (2a, ..., 2n) arranged on a same circle (10, 11) being on a diameter of the circle (10, 11), or that form the summits of a regular polygon inscribed in the circle (10, 11).

10. Microsystem (1) according to one of claims 8 or 9, the sensors (2a, ..., 2n) placed on different circles (10, 11) being offset radially two by two.

11. Microsystem (1) according to one of the previous claims, formed by etching, such as a chemical or laser etching, or by machining of a substrate (23).

12. Microsystem (1) according to one of the previous claims, comprising a semi-conductor, such as silicon, or polymer.

13. Device (20) for separating fluids (5, 6) not miscible with each other and contained in a mixture (4), comprising at least one microsystem (1) according to one of the previous claims and a support (21), the microsystem (1) being arranged on one face (28) of the support (21).

14. Device (20) according to claim 13, the passage (25) of the microsystem (1) being arranged opposite a hole (22) passing through the support (21).

15. Device (20) according to one of claims 13 or 14, the microsystem (1) being fixed for example by welding, with adhesive, or by molecular adhesion, on the face (28) of the support (21).

16. Device (20) according to one of claims 13 to 15, said device (20) being a recipient intended to contain the mixture (4), the support (21) being at least one wall of this recipient.

17. Device (20) according to one of claims 13 to 15, the support (21) being a cover, intended to cover a recipient (24) containing the mixture (4).

18. Device (20) according to one of claims 13 to 15, this device (20) being a pipe in which the mixture (4) is intended to circulate, the support (21) being at least one wall of said pipe.

19. Device (20) according to one of claims 16 or 18, the microsystem (1) being arranged outside of the recipient or the pipe.

20. Method for separating fluids (5, 6), not miscible with each other and contained in a mixture (4), by means of a microsystem (1) according to one of claims 1 to 12, comprising:
- a step of detecting the presence of at least one fluid (5, 6) in the area (7) of the mixture (4) intended to be inspected by the detection means (2),
- a step of acquiring by the control means (26) at least one detection signal for the presence of the fluid (5, 6) in the inspected area (7), delivered by the detection means (2),
- a step of processing the detection signal by the control means (26), which then deliver to the controlled means (3) a signal for opening or closing the passage (25) as a function of the detection signal received, and
- a step for opening or closing the passage (25) by the controlled means (3) as a function of the signal received for opening or closing the passage (25).

21. Method for separating fluids (5, 6) according to claim 20, in which, when the detection means (2) detect the presence of at least two fluids (5, 6) in the inspected area (7), the control means (26) deliver to the controlled means (3) a signal for opening the passage (25).

22. Method for separating fluids (5, 6) according to claim 20, in which, when the detection means (2) detect the presence of at least two fluids (5, 6) in the inspected area (7), the control means (26) deliver to the controlled means (3) a signal for closing the passage (25).

23. Method for separating fluids (5, 6) according to one of claims 20 to 22, in which the control means (26) deliver the signal for opening or closing the passage (25) to the controlled means (3) only after having processed the detection signals from all of the sensors (2a, ..., 2n).

24. Method for separating fluids (5, 6) according to one of claims 20 to 23, the step of processing the detection signal taking into account a delay calculated as a function of the distance between the inspected area (7) and the passage (25), and/or the viscosity of the fluid (5, 6) detected by the detection means (2) in the inspected area (7).

25. Method for separating fluids (5, 6) according to one of claims 20 to 24, in which the step of processing the detection signal takes into account the speed of displacement in the mixture (4) of the fluid (5, 6) detected.
